# EUROPÄISCHE PATENTSCHRIFT

(11) **EP 1 651 404 B1**
(45) Veröffentlichungstag und Bekanntmachung des Hinweises auf die Patenterteilung: **13.05.2009**
(21) Anmeldenummer: 04762601.5
(22) Anmeldetag: 30.07.2004
(51) Int. Cl.: B28B 1/00

(54) **VERFAHREN UND SCHLICKER ZUR HERSTELLUNG EINES FORMKÖRPERS AUS KERAMISCHEM MATERIAL, KERAMISCHER FORMKÖRPER UND VERWENDUNG EINES SOLCHEN FORMKÖRPERS**
METHOD AND SLIP FOR PRODUCTION OF A MOULDED BODY FROM CERAMIC MATERIAL, CERAMIC MOULDED BODY AND USE OF SUCH A MOULDED BODY
PROCEDE ET BARBOTINE POUR LA PRODUCTION D'UN CORPS MOULE EN MATIERE CERAMIQUE, CORPS MOULE CERAMIQUE ET UTILISATION D'UN TEL CORPS MOULE

(30) Priorität: 30.07.2003 DE 10335224
(43) Veröffentlichungstag der Anmeldung: 03.05.2006
(73) Patentinhaber: Universität Bremen, 28359 Bremen (DE)
(72) Erfinder: KÜHN, Martina, 27809 Lemwerder (DE); DIERKES, Stephan, 28357 Bremen (DE); KOCH, Dietmar, 28359 Bremen (DE); ANDRESEN, Lars, 24376 Kappeln (DE); GRATHWOHL, Georg, 28207 Bremen (DE)
(74) Vertreter: Manasse, Uwe
(86) Internationale Anmeldenummer: PCT/DE2004/001756
(87) Internationale Veröffentlichungsnummer: WO 2005/012205

(56) Entgegenhaltungen:
- EP-A- 0 295 834
- EP-A- 0 511 634
- DE-A- 10 065 138
- DE-A- 10 222 788
- GB-A- 1 283 692
- US-A- 5 482 778
- US-A- 5 725 827
- US-A- 5 811 171
- DATABASE WPI Section Ch, Week 199026 Derwent Publications Ltd., London, GB; Class A82, AN 1990-198918 XP002314206 & JP 02 133512 A (MITSUMARU KASEI KOGYO KK) 22. Mai 1990 (1990-05-22)

## Beschreibung

Die Erfindung betrifft ein Verfahren zur Herstellung eines Formkörpers aus keramischem Material.

Zur Herstellung gesinterter keramischer Formkörper sind grundsätzlich zwei Verfahren bekannt.

Zum einen ist es bekannt, Pulver zur Herstellung der Keramik in die gewünschte Form zu pressen und den so gewonnenen gepreßten Grünkörper zu sintern. Nachteilig ist, daß nur begrenzte Formen möglich sind. Ferner schwindet der Grünkörper beim Sintern. Deshalb wird in der EP 0 413 456 B1 ein Verfahren offenbart, nach dem keramisches, Siliziumcarbid (SiC) enthaltendes Pulver in Ethanol suspendiert, gegebenenfalls feiner gemahlen und gesiebt wird. Anschließend wird das Ethanol ausgetrieben und das so erhaltene Pulver zu einem Grünkörper gepreßt und anschließend unter Sauerstoffatmosphäre gesintert. Das Siliziumcarbid oxidiert dabei zu Siliziumoxid (SiO₂) und wirkt der Schwindung entgegen.

Zum anderen ist es bekannt, einen Schlicker aus keramischem Pulver herzustellen. Dabei wird das keramische Pulver in einem Lösemittel, meist Wasser, zusammen mit einem polymeren Binder suspendiert. Der Schlicker wird in eine Form gegossen und sodann konsolidiert, wobei es zu einem Sol-Gel-Übergang kommt und ein fester Körper entsteht. Dieser Körper kann aus der Form entnommen werden, ohne daß er seine Form ändert. Der Körper wird getrocknet, wobei unter starker Schwindung der eigentliche Grünkörper entsteht. Zur Verringerung von Trockenschwindung während des Trocknens wird gefriergetrocknet, überkritisch (unter Druck) oder unter Vakuum getrocknet. Das Gefriertrocknen wird oft unter gleichzeitigem Vakuum durchgeführt. Der Grünkörper kann sodann gesintert werden, wobei der Binder entweicht. Ein Vorteil dieses Verfahrens, das als Gel-casting bekannt ist, ist, daß sich sehr komplizierte Formen abbilden lassen. Nachteilig ist jedoch, daß der gesinterte Formkörper gegenüber dem Guß- und Grünkörper stark schwindet.

Es sind Versuche unternommen worden, das Schwinden bei aus einem Schlicker gegossenen Keramiken zu minimieren. So ist es aus der EP 1 122 227 A2 bekannt, dem Schlicker Silizium oder eine Mischung aus Aluminium und Aluminiumoxid beizugeben. Nach dem Konsolidieren und Gefriertrocken wird der so erlangte Grünkörper unter Sauerstoffatmosphäre gesintert. Die Maßhaltigkeit ist bei diesem Verfahren immer noch unbefriedigend.

Aus der GB-A-1 283 692 ist ein wärmeisolierendes Feuerfestmaterial bekannt, das 1-20 Gewichtsprozent Aluminium, Magnesium, Silizium oder Zirkonium in teilchenförmiger Form, 10-97 Gewichtsprozent einer faserförmigen Feuerfestkomponente ausgewählt aus Alumino-Silikat-Faser, Zirkonfaser und Silikafaser, und ein Bindemittel umfassend ein organisches Bindemittel und kolloidales Silikasol umfasst.

Aus der US 5,482,778A ist ein Verfahren zur Herstellung eines Metallmatrix-Verbundkörpers bekannt, das die Schritte umfasst: (a) Bereitstellen einer Aluminium-Legierung, die Aluminium sowie wenigstens etwa 1 Gew.-% Magnesium umfasst, sowie wenigstens eines Materials, das aus der Gruppe ausgewählt ist, die aus einer permeablen Masse eines keramischen Füllstoffmaterials und einer Vorform besteht, wobei das wenigstens eine Material wenigstens eine Oberfläche aufweist, die durch ein Sperrschichtelement definiert wird; (b) in Gegenwart eines Gases, in Kontakt bringen der genannten Aluminium-Legierung im schmelzflüssigen Zustand mit einer Zone des genannten wenigstens einen Materials, so dass das genannte Sperrschichtelement wenigstens teilweise einen Abstand von der genannten Kontaktzone aufweist, und spontan Infiltrieren des genannten wenigstens einen Materials mit der genannten schmelzflüssigen Aluminium-Legierung bis zu dem genannten Sperrschichtelement; und (c) Erstarren lassen der genannten schmelzflüssigen Aluminium-Legierung, um eine feste Metallmatrixstruktur auszubilden, die das genannte wenigstens eine Material einbettet und die genannte Oberfläche aufweist, die von dem genannten Sperrschichtelement festgelegt wird.

Hiervon ausgehend liegt der Erfindung das Problem zugrunde, ein Verfahren zur Herstellung keramischer Formkörper vorzuschlagen, das die Vorteile des Gel-casting, auch komplizierte Formen abbilden zu können, nutzt und bei dem gleichzeitig eine kontrollierte Volumenänderung möglich ist sowie die komplizierten Trocknungsprozesse des Gel-castings vermieden, werden.

Zur Lösung dieses Problems wird nach dem erfindungsgemäßen Verfahren ein Metalloxidpulver und ein Metallpulver in einem kolloidalen Sol zu Schlicker verrührt und dieser Schlicker sodann in einer Form zu einem Grünkörper durch Gefriergelieren konsolidiert und schließlich der Grünkörper in aktiver, ein Oxidieren des Metallpulvers ermöglichender Atmosphäre zu dem Formkörper gesintert, wie es in Anspruchs 1 definiert ist. Bevorzugte Ausführungsformen ergeben sich aus den Unteransprüchen.

Der gelartige Grünkörper entsteht allein durch Konsolidieren des Schlickers, nachdem er in die Form gegossen ist. Dabei wird konkret zum Konsolidieren der Schlikker in der Form unter den Gefrierpunkt des Lösemittels abgekühlt, was man als Gefriergelieren bezeichnen kann. Überraschend dabei ist, daß der Körper auch nach dem Auftauen des Lösemittels seine Form konturgetreu beibehält. Der Grünkörper wird nun getrocknet. Aufgrund der bereits festen Form des Grünkörpers kann dieses unter Normalbedingungen oder, zur Beschleunigung des Trockenprozesses unter erhöhter Temperatur, geschehen. Der Grünkörper verhält sich beim Trocknen konturtreu. Komplizierte Trockenverfahren, wie oben beim Gel-casting beschrieben, sind nicht erforderlich. Der Grünkörper wird unter einer Atmosphäre, die ein Oxidieren des Metallpulvers erlaubt, vorzugsweise Sauerstoffatmosphäre, gesintert. Das Oxidationsmittel, also vorzugsweise der Sauerstoff, dringt durch die offene Porosität des Grünkörpers in den Grünkörper ein, so daß das Metallpulver oxidiert. Nach dem erfindungsgemäßen Verfahren findet etwas statt, was man als Reaktionssintern bezeichnen kann. Der Erfindung liegt dabei die Erkenntnis zugrunde, daß sich Schwinden zum einen durch die Vermeidung des Binders reduzieren läßt. Zum anderen wird Schwinden durch das Oxidieren des Metallpulvers kompensiert. Dabei kann durch die Wahl der Menge des Metallpulvers das Maß der Schwindung auf einen gewünschten Wert, der auch Nullschwindung beinhaltet, eingestellt und sogar überkompensiert werden. Ferner hat sich gezeigt, daß die so gewonnene Keramik gegenüber dem klassischen Gel-casting verbesserte mechanische Eigenschaften aufweist. Schon der Grünkörper verfügt über eine erhöhte Festigkeit.

Um die mechanischen Eigenschaften, insbesondere Zugfestigkeit und Kerbschlagzähigkeit, weiter zu verbessern, kann dem Schlicker eine Bewehrung aus keramischen Fasern, wie zum Beispiel oxidische, carbidische und/oder nitridische Fasern, zugegeben werden. Um eine thermisch oder elektrisch leitfähige Keramik zu erhalten, kann dem Schlicker auch ein leitfähiges Material, beispielsweise Siliziumcarbid, zugegeben werden. Schließlich kann der Schlicker auch mit Kohlenstoff oder Kohlenstoffasern dotiert werden. Der Kohlenstoff verbrennt während des Sinterns vollständig und hinterläßt gezielt eingebrachte Poren und/oder Kanäle im Formkörper.

Darüber hinaus können nach einer Weiterbildung der Erfindung auch die Oberflächeneigenschaften des keramischen Formkörpers während des Herstellungsprozesses mit beeinflußt werden. So ist es möglich, in den Grünkörper einen die Oberflächeneigenschaften des späteren Formkörpers bestimmenden Stoff nachzuinfiltrieren. In Betracht kommen Silane, Siloxane, Sole, eine Metallschmelze, eine Glasschmelze und/oder ein Schlicker. Alternativ kann der Stoff auch in die fertige Keramik nachinfiltriert werden.

Der erfindungsgemäße Schlicker besteht zur Lösung des Problems aus in einem kolloidalen Sol suspendierter Mischung aus Metalloxidpulver und Metallpulver. Dieser Schlicker läßt sich nach dem oben beschriebenen Verfahren sintern. Als Sole kommen insbesondere Siliziumoxidsol (Kieselsol), Aluminiumoxidsol, Aluminiumhydroxidsol (Boehmit) und/oder Zirkoniumoxidsol in Betracht. Diese sollten als Nanosol vorliegen. Als Metalloxid kommen insbesondere Silizium-, Aluminium-, Zirkonium-, Titan-, Calzium-, Magnesiumoxid und/oder Mullit und/oder Spinell in Betracht. Als Metallpulver können edle, halbedle oder unedle Metalle sowie, alternativ, Legierungen dieser Metalle oder intermetallische Legierungen verwendet werden.

Ein das der Erfindung zugrundeliegende Problem lösender keramischer Formkörper ist durch Reaktionssintern unter oxidierender Atmosphäre eines Grünkörpers aus einem gefriergelierten Schlicker aus in einem kolloidalen Sol suspendierter Mischung aus Metallpulver und Metalloxidpulver hergestellt.

Ein solcher keramischer Formkörper läßt sich aufgrund der sehr präzisen Abformgenauigkeit und Konturtreue vorzugsweise in der Raumfahrttechnik, Mikrosystemtechnik, der Feuerfesttechnik und/oder der Gießtechnik, insbesondere als Gußform, vorteilhaft einsetzen. Insbesondere für Metallguß ist der erfindungsgemäße keramische Formkörper von Vorteil. So kann zum Beispiel ein Urmodell genau im Maßstab 1:1 erzeugt und dieses mit dem erfindungsgemäßen Schlicker abgeformt werden. Dem Schlicker wird dabei genau so viel Metallpulver zugegeben, daß die Volumenzunahme beim Sintern genau der Schwindung des späteren Metaligußkörpers entspricht. Der keramische Formkörper ist dann also als Gußform genau um die Schwindung des Metallgusses größer. Die Erfindung läßt sich deshalb besonders gut für hochpräzisen Guß (Hochpräzisionsabformung) verwenden.

Eine weitere Anwendung ergibt sich im Bereich der Chromatographie. Es ist bekannt, Schüttungen aus keramischem Pulver in diesem Bereich einzusetzen. Aus der vorstehenden Beschreibung wird deutlich, daß sich nicht nur das Maß der Volumenänderung (Volumenzu- und -abnahme sowie vollständige Kompensation), sondern auch die Porosität einstellen läßt. Dieses läßt sich vorteilhaft dazu nutzen, einen monolithischen keramischen Formkörper mit reaktiver Oberfläche, beispielsweise für die Biotechnologie, insbesondere für die Chromatographie, herzustellen.

Ferner läßt sich die Erfindung sehr gut einsetzen, um ein Verbundbauteil aus einem keramischen Formkörper und einem Träger herzustellen. Keramische Bauteile lassen sich nur schwer mit anderen Materialien, beispielsweise mit Metallen, verbinden. Aufgrund des erfindungsgemäßen Verfahrens ist es nun möglich, daß Maß der Volumenänderung beim Sintern durch Zugabe der entsprechenden Menge an Metallpulver zum Schlicker so einzustellen, daß der keramische Formkörper mit dem Träger preßgepaßt ist.

Die Erfindung wird nachfolgend anhand eines in den Zeichnungen dargestellten Ausführungsbeispiels näher erläutert. Es zeigen:
- Fig. 1: einen Ablaufplan eines Verfahrens zur Herstellung eines keramischen Form- körpers mit den Erfindungsmerkmalen,
- Fig. 2: eine Vorrichtung zum Gefriergelieren eines Schlickers in schematischer Dar- stellung,
- Fig. 3: eine rasterelektronenmikroskopische Aufnahme eines nach dem erfindungs- gemäßen Verfahren hergestellten Formkörpers,
- Fig. 4: ein Diagramm der Schwindung im Gel-casting-Verfahren hergestellter, ke- ramischer Werkstoffe über der Sintertemperatur im Vergleich mit dem nach dem erfindungsgemäßen Verfahren hergestellten Formkörper,
- Fig. 5: eine mögliche Anwendung für einen keramischen Formkörper nach der Er- findung.

Nach dem erfindungsgemäßen Verfahren werden zunächst ein Metalloxidpulver und ein Metallpulver, beispielsweise Aluminiumoxidpulver und Aluminiumpulver, gemischt. Dieses Gemisch wird in einem kolloidalen Sol, hier Kieselsol, homogenisiert und zu einem Schlicker suspendiert. Der Schlicker wird sodann in eine Negativform für den späteren Formkörper gegossen und mit der Form auf eine Temperatur unterhalb des Gefrierpunktes des Lösemittels gekühlt, also eingefroren. Die Temperatur sollte dabei deutlich unterhalb des Gefrierpunktes liegen. Im vorliegenden Fall wird der Schlicker mit der Form auf -5°C bis -40°C abgekühlt. Hierdurch wird der Schlicker irreversibel zu einem festen Gel (Grünkörper). Dieser Grünkörper kann nun entformt und anschließend aufgetaut werden.

Der Grünkörper wird bei Normalbedingungen oder im Luftofen bei erhöhter Temperatur getrocknet und unter Sauerstoffatmosphäre gesintert. Durch die offene Porosität dringt der Sauerstoff in den Grünkörper ein und das Metallpulver oxidiert. Der keramische Formkörper entsteht.

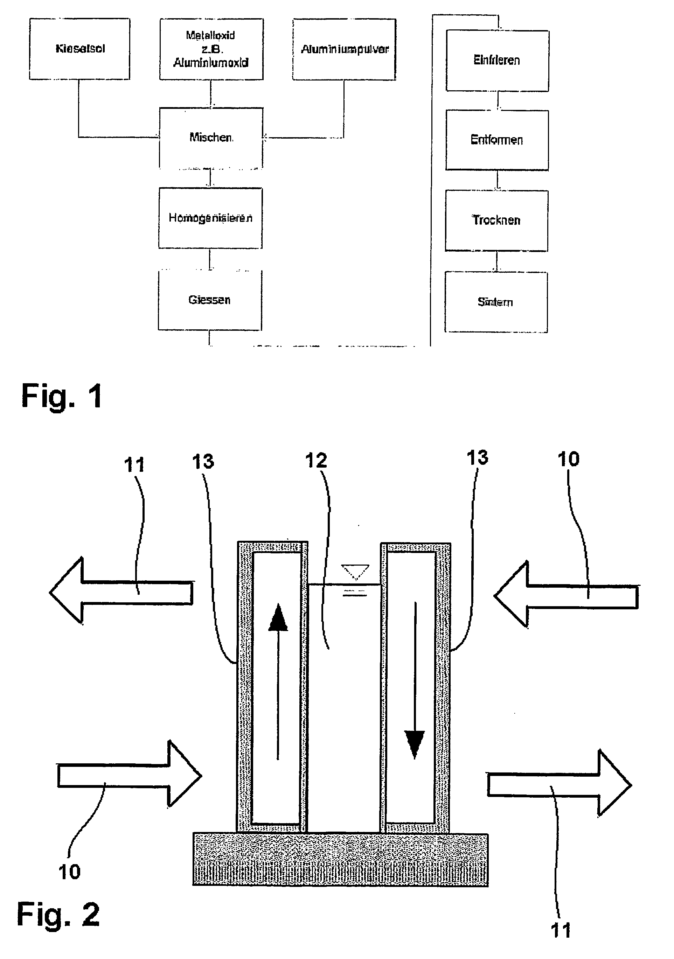

Fig. 2 zeigt eine Vorrichtung, in welcher der Schlicker gefriergeliert werden kann. Die Vorrichtung verfügt über schematisch als Pfeile angedeutete Kühlmittelzuleitungen 10 und Kühlmittelableitungen 11. Der Schlicker 12 ist, gegebenenfalls mit Form, in einen Kühlmantel 13, der auch die Form zum Abgießen des Schlickers 12 selbst sein kann, eingesetzt. Durch das Kühlmittel wird der Schlicker 12 eingefroren und geliert. Als Kühlmittel eignet sich, wenn der Schlicker auf bis zu etwa -40°C eingefroren werden soll, Ethanol. Bei niedrigeren Temperaturen bis etwa -80°C eignet sich Trockeneis. Bei noch tieferen Temperaturen kommt flüssiger Stickstoff zum Einsatz. Die Temperatur hat Einfluß auf die Kristallgröße des gefrorenen Lösemittels, hier Wasser aus dem Sol, und damit auf die Porengröße.

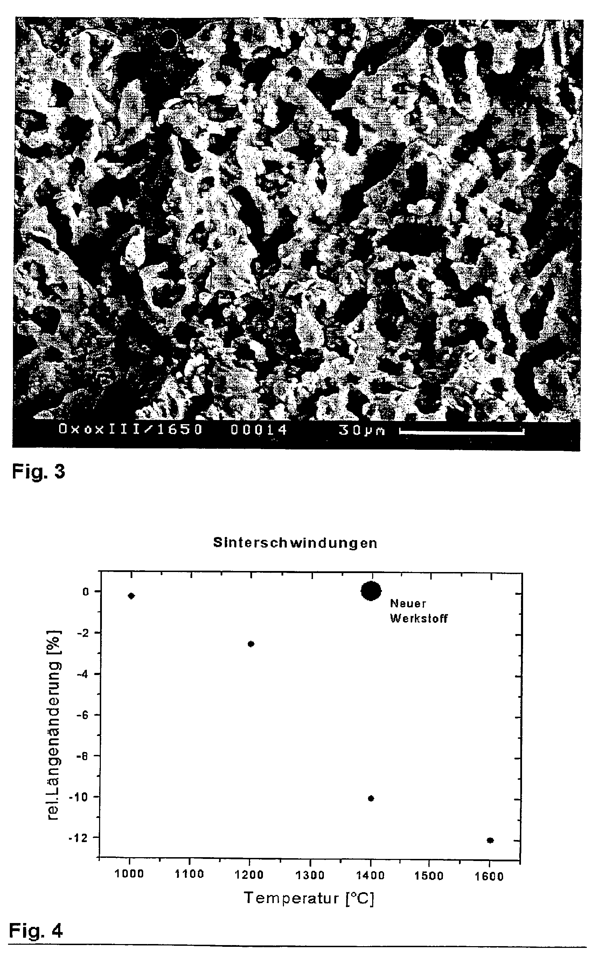

Eine mit einem Rasterelektronenmikroskop gemachte Aufnahme einer Bruchfläche des keramischen Formkörpers zeigt Fig. 3. Man erkennt deutlich das keramische Material (hell) und die Poren (dunkel).

Fig. 4 zeigt einen Vergleich des keramischen Materials aufgrund des erfindungsgemäßen Verfahrens mit einem Material nach dem Stand der Technik. Es ist zu erkennen, daß Material nach dem Stand der Technik bereits bei 1000°C eine leichte Schwindung erfährt. Bei 1400°C tritt bereits eine Schwindung von etwa 10% auf, während bei dem nach der Erfindung hergestellten Material keine Schwindung auftritt.

Nach einem zweiten Ausführungsbeispiel werden metalloxidisches Sol, beispielsweise Silizium-Sol (Kieselsol) mit einem Keramikpulver, beispielweise Mullit und/oder Aluminiumoxid zu einem homogenen Schlicker verrührt. Konkret werden 50 Gewichtsteile wässriges Silizium-Sol (40 gew.-% SiO₂ in 60 gew.-% Wasser) mit einer Partikelgröße von 14 nm und 100 Gewichtsteile Keramikpulver vermengt. Hinzu kommen 15 Gewichtsteile Metallpulver, nämlich Aluminiumpulver oder ein Pulver aus Aluminium mit 5% Magnesium (AIMg5).

Der Schlicker wird in eine Form gefüllt und bei -40°C gefriergeliert. Nach dem Entformen wird der Grünkörper bei etwa 70°C getrocknet und bei wenigstens 1000°C, insbesondere 1400°C unter Sauerstoffatmosphäre gesintert. Dabei oxidiert das Metallpulver.

Gegebenfalls kann auch so viel Metallpulver bzw. so wenig Sauerstoff zugegeben werden, daß das Metall nicht vollständig oxidiert. Es bleibt dann Metallpulver im keramischen Formkörper zurück, so daß dieser thermisch und elektrisch leitfähig ist. Der gleiche Effekt läßt sich erzielen, wenn der Grünkörper bei einer niedrigeren Temperatur gesintert oder die Reaktion abgebrochen wird, indem der Sintervorgang vorzeitig beendet wird.

Durch große Gestaltungsfreiheit hinsichtlich der Form sind vielfältige Anwendungsmöglichkeiten gegeben. So lassen sich die keramischen Formkörper als Gußform, in der Feuerfesttechnik oder der Mikrosystemtechnik einsetzen.

Durch Dotieren des Schlickers mit Kohlenstoff lassen sich gezielt kleine Kanäle in dem Formkörper vorsehen, so daß dieser beispielsweise als Wärmetauscher verwendet werden kann. Der Kohlenstoff verbrennt beim Sintern vollständig und hinterläßt die Kanäle oder auch gezielt eingebrachte Poren. Der Kohlenstoff bildet gleichsam einen Gußkern, bis hin zu vielen (mikroskopisch) kleinen Gußkernen.

Aus der vorstehenden Beschreibung wird deutlich, daß sich nicht nur das Maß der Volumenänderung (Volumenzu- und -abnahme sowie vollständige Kompensation), sondern auch die Porosität einstellen läßt. Dieses läßt sich vorteilhaft für die Chromatographie einsetzen.

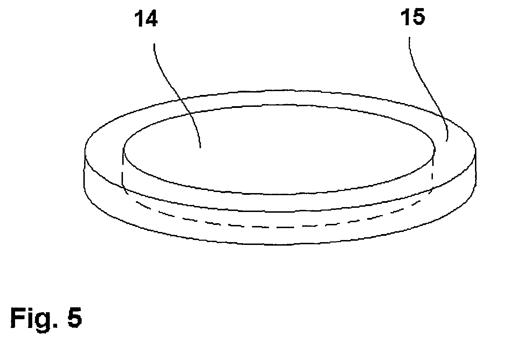

Eine weitere Anwendung der Erfindung ist in Fig. 5 gezeigt, bei der ein Filter 14 aus einer erfindungsgemäß hergestellten Keramik in einen Haltering 15 eingepreßt ist. Hierzu wird der Schlicker, dem so viel Metallpulver zugegeben wurde, daß der Grünkörper beim Sintern eine Volumenzunahme erfährt, in den Haltering 15 gegossen und zwischen zwei Kühlplatten analog der Vorrichtung gemäß Fig. 2 gefriergeliert. Nach dem Auftauen und Trocknen wird der Grünkörper im Haltering 15 gesintert, wobei sich sein Volumen entsprechend der Menge des zugegebenen Metallpulvers vergrößert. Der keramische Filter 14 ist so in den Haltering eingepreßt.

### Bezugszeichenliste:

- 10: Kühlmittelzuleitung
- 11: Kühlmittelableitung
- 12: Schlicker
- 13: Kühlmantel
- 14: Filter
- 15: Haltering

## Patentansprüche

1. Verfahren zur Herstellung eines Formkörpers aus keramischem Material, indem ein Metalloxidpulver und ein Metallpulver in einem kolloidalen Sol zu Schlicker verrührt werden und dieser Schlicker sodann in einer Form zu einem Grünkörper durch Gefriergelieren konsolidiert und schließlich der Grünkörper in aktiver, ein Oxidieren des Metallpulvers ermöglichender Atmosphäre zu dem Formkörper gesintert wird, wobei beim Gefriergelieren der Schlicker unter den Gefrierpunkt des Lösemittels abgekühlt wird, das Lösemittel danach aufgetaut und der Grünkörper getrocknet wird.

2. Verfahren nach Anspruch 1, indem der Grünkörper unter Sauerstoffatmosphäre gesintert wird.

3. Verfahren nach Anspruch 1 oder 2, indem der Schlicker mit einer Bewehrung, insbesondere aus keramischer Faser, wie zum Beispiel oxidischen, carbischen und/oder nitridischen Fasern, dotiert wird.

4. Verfahren nach einem der Ansprüche 1 bis 3, indem der Schlicker mit leitfähigem Material, insbesondere Siliziumcarbid (SiC) dotiert wird.

5. Verfahren nach einem der Ansprüche 1 bis 4, **dadurch gekennzeichnet, daß** der Schlicker gezielt mit Kohlenstoff und/oder Kohlenstoffasern dotiert wird.

6. Verfahren nach einem der Ansprüche 1 bis 5, indem in den Grünkörper ein Oberflächeneigenschaften des späteren Formkörpers bestimmender Stoff, insbesondere Silane, Siloxane, Sole, eine Metallschmelze, eine Glasschmelze und/oder ein Schlicker, nachinfiltriert wird.

7. Verfahren nach einem der Ansprüche 1 bis 5, indem in den Formkörper ein Oberflächeneigenschaften des späteren Formkörpers bestimmender Stoff, insbesondere Silane, Siloxane, Sole, eine Metallschmelze, eine Glasschmelze und/oder ein Schlicker, nachinfiltriert und der Formkörper sodann erneut gebrannt wird.

## Claims

1. Method for producing a moulding made from ceramic material, in which a metal oxide powder and a metal powder are stirred in a colloidal sol to give a slip and said slip is then consolidated by freeze-gelation in a mould to give a green body, and lastly the green body is sintered in an active atmosphere, permitting an oxidation of the metal powder to give the moulded body, whereby in the freeze-gelation the slip is cooled to below the freezing point of the solvent, the solvent is thereafter thawed and the green body is dried.

2. Method according to claim 1, in which the green body is sintered in an oxygen atmosphere.

3. Method according to claim 1 or 2, in which the slip is doped with a reinforcement, in particular made of ceramic fibres, such as for example oxidic, carbidic and/or nitridic fibres.

4. Method according to one of claims 1 to 3, in which the slip is doped with conductive material, in particular silicon carbide (SiC).

5. Method according to one of claims 1 to 4, **characterised in that** the slip is doped selectively with carbon and/or carbon fibres.

6. Method according to one of claims 1 to 5, in which a substance which determines surface properties of the later moulding is post-infiltrated into the green body, in particular hydrosilicon, siloxane, sols, a metal melt, a glass melt and/or a slip.

7. Method according to one of claims 1 to 5, in which a substance which determines surface properties of the later moulding is post-infiltrated into the green body, in particular hydrosilicon, siloxane, sols, a metal melt, a glass melt and/or a slip, and the moulding is then fired again.

## Revendications

1. Procédé pour fabriquer un corps moulé à base de matériau céramique, une poudre d'oxyde de métal et une poudre de métal étant remuées dans un sol colloïdal formé de barbotine et cette barbotine étant consolidée ensuite dans un moule pour former un corps vert par gélification avec congélation et enfin le corps vert étant fritté dans une atmosphère active et permettant une oxydation de la poudre de métal pour obtenir le corps moulé, la barbotine étant refroidie au-dessous du point de congélation du solvant lors de la gélification avec congélation, le solvant étant ensuite dégelé et le corps vert refroidi.

2. Procédé selon la revendication 1, le corps vert étant fritté sous atmosphère d'oxygène.

3. Procédé selon la revendication 1 ou 2, la barbotine étant dopée d'une armure, en particulier à base de fibre céramique, comme par exemple des fibres oxydiques, carbiques et/ou nitridiques.

4. Procédé selon l'une quelconque des revendications 1 à 3, la barbotine étant dopée avec du matériau conducteur, en particulier du carbure de silicium (SiC).

5. Procédé selon l'une quelconque des revendications 1 à 4, **caractérisé en ce que** la barbotine est dopée de façon ciblée avec du carbone et/ou des fibres de carbone.

6. Procédé selon l'une quelconque des revendications 1 à 5, un produit déterminant des propriétés de surface du futur corps moulé, en particulier des silanes, des siloxanes, des sols, une masse fondue de métal, une masse fondue de verre et/ou une barbotine, étant infiltrés ensuite dans le corps vert.

7. Procédé selon l'une quelconque des revendications 1 à 5, un produit déterminant des propriétés de surface du futur corps moulé, en particulier des silanes, siloxanes, sols, une masse fondue de métal, une masse fondue de verre et/ou une barbotine étant infiltrés ensuite dans le corps moulé et le corps moulé étant ensuite cuit à nouveau.
